# EUROPEAN PATENT APPLICATION

(11) **EP 0 691 074 A1**
(43) Date of publication of application: **10.01.1996**
(21) Application number: 95109078.6
(22) Date of filing: 13.06.1995
(51) Int. Cl.: A01J 25/00

(54) **Method for the automated production of cheese with a cheese making reactor, and relative plant**

(30) Priority: 29.06.1994 IT UD940113
(71) Applicant: LATIK SaS di DI DIBINO V. & C., I-33038 S. Daniele del Friuli (UD) (IT)
(72) Inventor: Di Bidino, Virginio, I-33030 Rodeano Alto-Rive d'Arcano (UD) (IT)
(74) Representative: Petraz, Gilberto Luigi

(57) **Abstract**

Method for the automated production of cheese in a plant comprising at least one cheesemaking reactor and a forming column suitable for the compacting and accumulation of the curd, there being included below the forming column shearing blades (30a, 30b) and moulds (31) associated at least momentarily with a first conveyor (32), the curd, after being coagulated and possibly cooked, being introduced into a cheesemaking reactor (11, 111) where it is mixed while it is fed forwards at least in steps, the curd undergoing a process of drainage and progressive syneresis within the reactor (11, 111) and being then introduced into a forming column (28) immediately downstream of the reactor (11, 111), the curd within the reactor (11, 111) receiving at least additions of aromatising, preserving and/or activating substances in a solid, liquid or gaseous form.
Plant for the automated production of cheese with a cheesemaking reactor, the cheesemaking reactor cooperating with possible salt-dispensing means (23, 36) and with a forming column (28) suitable for the compacting and accumulation of curd, the forming column (28) cooperating at its lower end with shearing blades (30a, 30b) and with moulds (31) associated at least momentarily with a first conveyor (32), the reactor (11, 111) comprising a feeder end (18) and an outlet (17), the feeder end (18) being associated directly with coagulation kettles for feeding the possibly cooked curd, the reactor (11, 111) being positioned within a tank (44) for the recovery of liquids, the tank (44) being associated with a perforated jacket (43) suitable for the expulsion and progressive drainage of the liquid whey contained in the curd, that is to say, suitable for the syneresis during the movement of the curd within the reactor (11, 111), the reactor (11, 111) discharging continuously from its outlet (17), when syneresis is completed, the curd into the forming column (28), the reactor (11, 111) containing at least means (45) to introduce activating, preserving or aromatizing substances in a solid, liquid and/or gaseous form and also means (41, 42, 55) to stir and mix the curd.

## Description

This invention concerns a method for the automated production of cheese with a cheesemaking reactor and the relative plant, as set forth in the respective main claims.

The plant and method according to the invention are employed in the dairy industry for the automation and substantially continuous performance of the steps to produce cheeses, particularly pressed-type cheeses and/or cooked cheeses, whether hard or semi-hard, with processing under whey.

To be more exact, the invention has been realised for carrying out continuously and in an automated manner the operations of syneresis and/or draining, salting and division of the curd into loaves, these loaves being then placed in moulds or matrices for movement to the successive processes.

The invention makes possible the elimination of every type of manual processing of the curd, the greatest possible limitation of possible environmental contamination and the speeding up and considerable simplification of the whole production cycle.

A typical process for the production of cheese includes a first cheesemaking step carried out in appropriate receptacles commonly called "coagulation and cooking kettles".

The milk passes in the kettles from a liquid state to a solid state owing to the coagulation, or precipitation, of protein substances such as casein owing to the action of an extract of enzymes called "rennet".

The result of this first processing step is a product having a gelatinous consistency and called "curd".

In the next step the curd is cut into loaves of different sizes depending on the type of cheese to be made.

The curd, where it is intended for the production of hard or semi-hard cheeses, undergoes a heating or cooking process.

The cooking of the curd is necessary to dehydrate the granular structure of which it consists.

During this step the process common to all types of cheeses consists of the syneresis and/or drainage of the curd, that is to say, of the expulsion of the liquid whey from the gelatinous mass.

This syneresis is achieved by drying the curd owing to the effect of the variation of the acid "pH" and owing to the microbiological effect of selection of the lactic bacteria by the action of the temperature.

The syneresis of the curd with the present state of the art is carried out with various methods, depending on the finished product to be made.

A first solution provides for the use of cooking kettles when producing hard or semi-hard cheeses.

Another solution provides for the use of vats employed also for the salting, particularly where the cheeses have a pressed or filament-type paste.

Where the cheeses are soft or tender, the syneresis and/or drainage is carried out in heated chambers in forming moulds.

After this step of syneresis and/or drainage, where the cheese paste is hard, semi-hard or pressed, the curd is removed, often by hand, and placed in the moulds so as to take on the desired shape and is then pressed with manual and/or automated systems.

These systems, which are widely used in the state of the art, require various kettles occupied for a long time owing to the syneresis operations.

Moreover, these systems require great overall space in the factories and a considerable use of labour for the extraction, movement and discharge of the curd into the moulds.

Moreover, this situation entails great manual work on the product, with problems of hygiene and possible resulting contamination, and considerable exposure of the product to environmental contamination.

Various automated or partly-automated systems have been disclosed, but they involve the common feature of starting from curd already subjected to syneresis according to one of the above methods and they do not ensure continuity of the production cycle, nor do they overcome the problems mentioned above.

US-A-4,244,286 teaches the use of a device for the preparation of hard cheeses by separation of the liquid whey from the curd within a container equipped with a perforated vibratory screen.

The use of a container of the type disclosed in US-A-4,244,286, however, does not make possible the efficient performance of the syneresis process required, for instance, for cheeses of a pressed paste type or cooked, hard or semi-hard cheeses of a type processed under the whey, with which the device of US-A-4,244,286 cannot be used.

The process of forming such cheeses, such as pressed paste cheese, requires, in fact, a continuous, intense action of mixing the curd and making it uniform so as to obtain an efficient action of removing the liquid whey.

Cheeses which are processed in the whey, in turn, should not come into contact with the air in any step of their forming process and separation of the clotted curd from the liquid part, the reason being to prevent impairing the quality of the processing and the organoleptic properties of the finished product.

The present applicants have studied, tested and embodied this invention so as to overcome all these drawbacks arising from the state of the art and to improve the process of syneresis and/or drainage of the curd by standardising it from a quality point of view with a continuous process which enables environmental contamination and contact between the work force and the product to be reduced to a minimum, and also so as to obtain a versatile device which can be adapted to a plurality of types of cheeses and to various processing methods.

This invention is set forth and characterised in the respective main claims, while the dependent claims describe variants of the idea of the main embodiment.

The plant to produce cheese according to the invention includes a reactor into which is transferred the curd coming from the coagulation kettle after a possible cocking of the curd.

In this case the word "reactor" should be understood in the widest sense of the word, that is to say, as meaning an apparatus in which there take place important reactions which are and/or can be controlled from the exterior and with which chemical and physical conversions of the elements undergoing the process are achieved.

The reactor consists of a steel plate cylinder positioned horizontally, inclined or vertically in relation to the ground, at the two ends of which there are a feeder inlet and a discharge outlet for the curd.

The reactor includes a jacket containing a plurality of holes of different designs and may be positioned within a rounded outer container or within a tank.

The reactor may be stationary or else may be rotatable in one single direction or in two directions at variable speeds.

The tank too can be kept stationary or, where the reactor can be rotated, can be rotated together with the reactor irrespective of the direction of movement of the reactor itself.

The curd in the reactor undergoes the syneresis and/or drainage process, that is to say, the drying and compacting by expulsion and draining of the liquid whey contained in the curd.

This liquid whey emerges from the holes in the steel plate jacket and is collected in the tank or in an appropriate collection vessel.

Besides the syneresis and/or drainage process, there is also performed within the reactor the activation by immission of mesophilic and thermophilic micro-organisms such as yeast, aromatising, activating and preserving substances, which cause a change of the physical and chemical properties of the curd with resulting acidification of the curd and an acceleration of the syneresis and/or drainage process. These substances can be introduced into the reactor in a solid, liquid or gaseous form.

According to the invention and to the type of cheese to be produced, the syneresis process can be carried out under conditions of atmospheric pressure, under vacuum conditions or else under conditions of overpressure.

Where special cheeses with heterogeneous contents of fat and humidity are being produced, the reactor of the plant according to the invention can be configured to perform a partial syneresis with a resulting acidification of the curd in the whey.

In this case the reactor can be divided into a plurality of stages separated, for instance, by screens, in which the movement from one stage to another is determined by the curd reaching a given level of dehydration and therefore a given value of relative density.

A given step of acidification of the whey corresponds in this case to each successive stage.

Where the reactor can be rotated, one stage may also have an opposite direction of rotation as compared to the next stage for the purpose of accelerating the process of syneresis of the curd.

In one specific formulation of the invention for cheeses to be processed under the whey, the curd can be fed into an advantageously vertically positioned reactor through a tube which initially has its outlet located substantially at the bottom of the reactor and which is progressively raised gradually as the curd fills the reactor.

This raising is carried out by keeping the outlet of the feeder tube below the level of the liquid, thus achieving the condition of processing under the whey, this condition being essential for this type of cheese.

According to the invention the reactor may contain stirring means, cutters and mixers, which are secured to the reactor or can move independently and assist the syneresis process by causing a continuous mixing of the curd.

Moreover, according to the invention, internal pipes may be included, for instance axially or radially to the reactor, so as to circulate a fluid which, depending on the purpose in question, is suitable to heat, cool, dilute or wash the curd.

The reactor in one embodiment of the invention is positioned horizontally in a position raised on a supporting structure.

According to a variant, the reactor is positioned at an incline to the horizontal, this inclination being variable and adjustable as required.

According to another variant, the reactor is positioned vertically and is equipped with screens which control the curd along its descent.

According to a further variant, where the reactor is vertical, the descent and compacting of the curd in the reactor are assisted and improved by providing a system for vertical oscillation of the reactor, the parameters of the frequency and travel of the oscillation being suitably calculated according to the specific process.

The curd leaving the outlet of the reactor is discharged directly and continuously into a forming column after the syneresis process has been completed.

According to the invention, where the cheeses require salting in the paste stage, the forming column is an element separate from the cheesemaking reactor, the means to distribute the salt being included advantageously between the outlet of the reactor and the inlet of the forming column.

Where the cheeses have a hard, semi-hard or pressed paste with processing in the whey, the function of the forming column, at least when the reactor is vertical, is carried out by the reactor itself at least in its lower part, where the curd is compacted and the product is prepared for discharge.

The reactor when positioned horizontally can be associated with lifting or inclination means with possible oscillation and vibration of variable parameters to assist discharge of the curd from the outlet of the reactor.

The forming column consists substantially of a vertically positioned tube, which is advantageously, but not necessarily, tapered and in which the curd is compacted and takes on the form of the tube which contains the curd.

This forming column is equipped on all or part of its surface with a filtration jacket to perform a filtration treatment of the curd during the compacting step.

The filtration jacket can be stationary or can be moved with a jerking up-and-down motion so as to assist the drainage and compacting.

According to a variant the forming column contains a plurality of interchangeable filtering apertures distributed in at least part of its sidewall, possibly at various heights; this enables the drainage characteristics to be adjusted and changed very quickly and readily to suit the type of cheese to be made and the times required by the production cycle.

The curd in the forming column accumulates and is compacted by its own weight.

The forming column cooperates in its lower part with a pair of shearing blades, namely an upper blade and lower blade respectively, which act on the column of curd and shear it into loaves of a desired height.

In particular, when the upper shearing blade is caused to act on the curd, the lower shearing blade is retracted to enable the sheared loaf to be discharged.

The successive step includes the closure of the lower blade and the retraction of the upper blade to enable the column of curd to descend for the successive shearing.

The distance between the two shearing blades can be adjusted to change the height of the loaves of curd even during the processing.

The lower open end of the forming column cooperates with a conveyor, on which are transported the moulds or matrices in which the sheared loaves of curd are held for movement to the successive processes such as the pressing and marking.

According to a variant, where so required by the height of the factory, the reactor is rested on the ground and the curd emerging from the outlet of the reactor is transferred upwards to the upper inlet of the forming column by suitable conveyor means.

According to the invention a means to dispense salt onto the curd is included in cooperation with the outlet of the curd from the reactor and thereabove, at least where cheeses of a pressed paste are being processed which contain a degree of humidity requiring salting of the paste stage.

The salting performs also an anti-fermentation action on the curd from a bacteriological point of view.

According to a variant, the salting operation is carried out within the reactor by dispensing means acting at the terminal part of the reactor.

According to another variant, so as to obtain a uniform distribution of the salt on the curd leaving the reactor, the curd is discharged into a rotary drum rotating with a continuous movement and containing within itself suitable containing cavities.

The rotary drum is located at an intermediate position between the outlet of the reactor and the inlet of the forming column and at a vertically coordinated position below the means that dispenses the salt.

When the salting has been carried out, the curd is discharged into the forming column, in which it collects and is compacted.

The whole plant is managed by an actuation and control unit, to which are connected measurement instruments such as thermometers, gauges, pH meters, etc.

A load cell and/or level probe are included at least in cooperation with the reactor and measure continuously the quantity of curd within the reactor and condition the speeds of feed and discharge so as to ensure in every step the maintaining of the quantity considered to be the most suitable for the type of product to be produced.

Load cells and/or level probes may also be included in cooperation with the forming column to ensure the complete filling thereof at all times by adjusting the compacting conditions according to the type of cheese being processed, and in cooperation with the salt dispensing means so as to feed the quantity of salt according to the quantity of curd discharged from the reactor.

The attached figures are given as a non-restrictive example and show some preferred embodiments of the invention as follows:-
- Fig.1: is a diagram of a form of embodiment of the production plant according to the invention;
- Fig.2: shows a possible variant of the plant of Fig.1;
- Fig.3: shows a partial longitudinal section of the cheesemaking reactor according to the invention;
- Fig.4: shows a view according to the arrow A of Fig.3;
- Fig.5: shows a variant of the inlet cross-section of the reactor of Fig.3;
- Fig.6: shows a section along the line C-C of Fig.5;
- Fig.7a: shows a section along the line B-B of Fig.3;
- Fig.7b: shows a section according to the arrow D of Fig.1 in an embodiment of a variant;
- Fig.8a: shows a variant of Fig.7;
- Fig.8b: shows a three-dimensional view of the cutter employed in the variant of Fig.8a;
- Fig.9: is a diagrammatic cross-section of a possible variant of the reactor employed in the plant according to the invention;
- Fig.10: shows a variant of the invention intended for cheeses processed under whey.

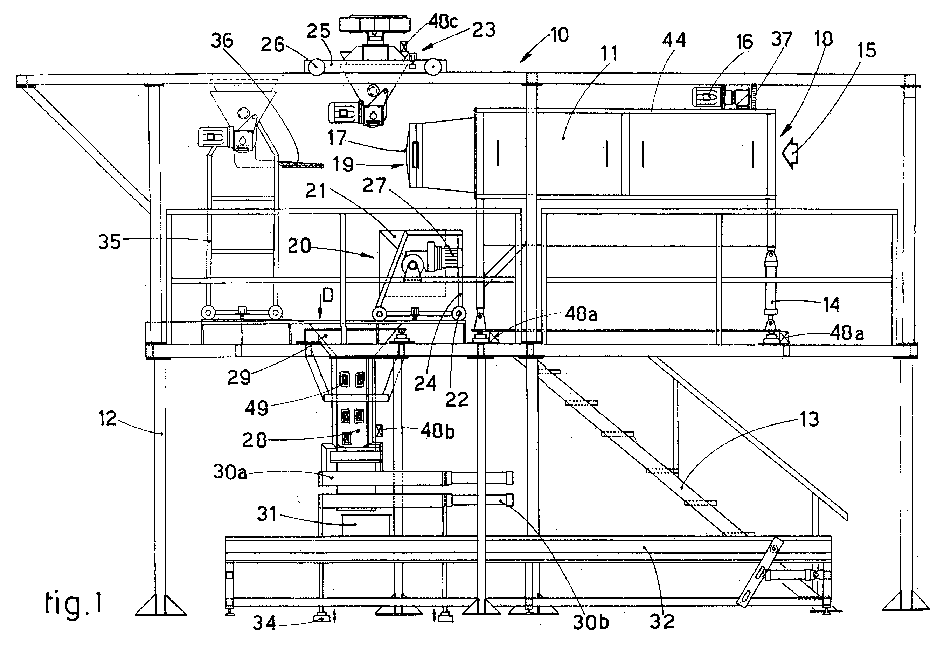

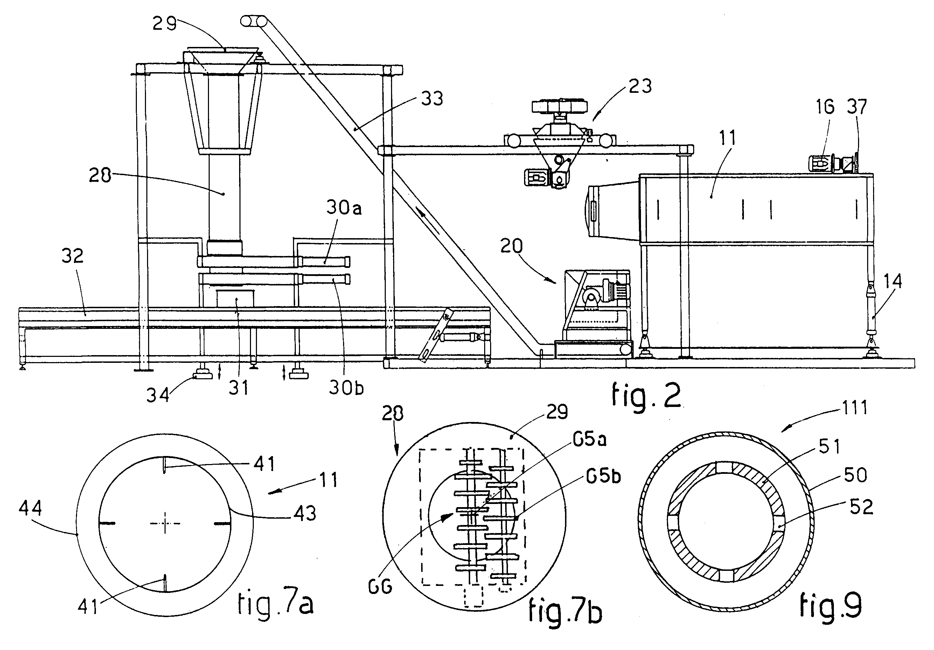

A production plant 10 shown in Figs.1 and 2 is typically intended for the production of cheeses of a pressed paste with a high degree of humidity.

The plant 10 comprises at least one cheesemaking reactor 11, which in the example of Fig.1 is installed in a horizontal position raised from the ground on a metallic structure 12.

A ladder 13 provides access to the reactor 11.

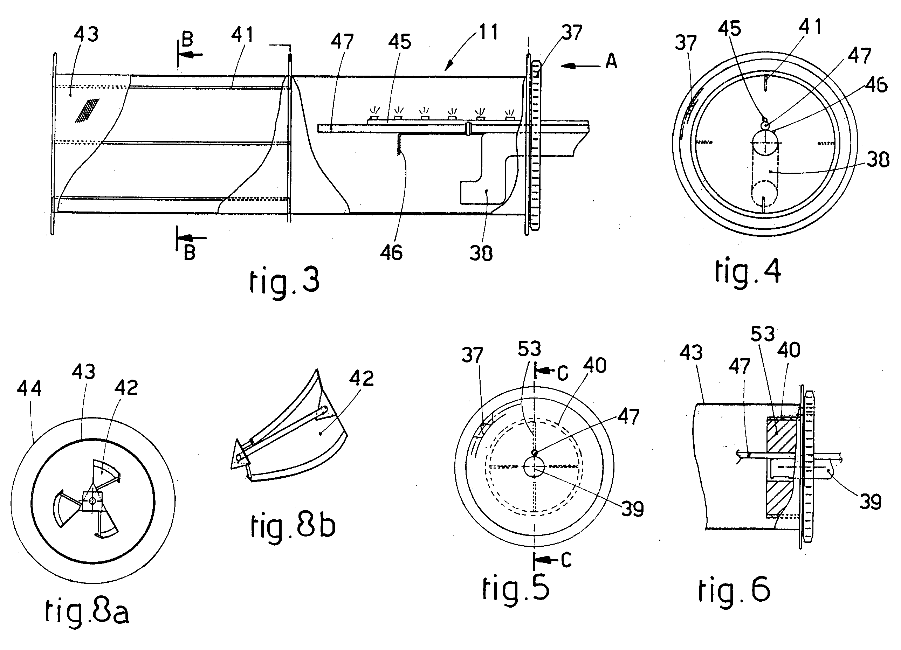

According to the invention the reactor 11 includes a jacket 43 of perforated steel plate (Fig.3) with holes of different designs and is positioned within a tank 44, in which is collected the liquid whey drained from the curd during the syneresis step carried out within the reactor 11.

In this case the reactor 11 is associated at least at its rear inlet end with a first jack 14 which enables the reactor 11 to be inclined, for instance, during the step of discharge of the curd.

The reactor 11 is fed with curd delivered from a coagulation kettle at its rear end 18, according to the direction indicated with the arrow 15, by means of suitable means, which are not shown here.

The feed of the curd into the reactor 11 can be carried out with a volumetric pump or by putting the interior of the reactor 11 under a negative pressure or by other known methods.

Two forms of embodiment for feeding the curd into the reactor 11 are shown in Figs.4 and 5.

In Fig.4 the entry takes place by means of a substantially S-shaped stationary tube 38 by means of which the speed and pressure of entry of the curd are reduced so that the impact of the curd against the inner sides of the wall of the reactor 11 is not too violent.

In the variants of Figs.5 and 6 a stationary tube 39 is included which discharges the curd being fed into a steel plate ring 40, which is concentric with the reactor 11, rotates therewith 11 but has a smaller diameter.

The steel plate ring 40 has radial walls 53 which enable the curd being fed to be distributed and slowed down.

This embodiment too makes possible a graduation of the speed and pressure of impact of the curd against the inner sides of the wall of the reactor 11.

In this case the reactor 11 is associated with a first motor 16, which acts on a gearwheel 37 that sets the reactor 11 in rotation at a variable speed, advantageously in two directions of rotation.

The rotary movement of the reactor 11 causes movement of the curd in the direction of the outlet 17 positioned at the front end 19 of the reactor 11.

The curd within the reactor 11 undergoes chemical and physical conversions due to its progressive drying and dehydration with a relative acidification; these conversions are assisted and enhanced by the immission of aromatising, activating and preserving substances in a solid, liquid or gaseous form into the curd.

Moreover, a plurality of instruments able to agitate the curd continuously are installed within the reactor 11 so as to carry out on the curd an intense mixing action and to assist and speed up the drainage of the liquid whey.

This continuous mixing causes in the curd within the reactor 11 the performance of those chemical and physical conversions, which are also determined by the addition of the activating and preserving substances and which, together with the action of separation from the liquid whey, lead to the obtaining of the desired finished result.

These agitation and mixing instruments may have the form of blades consisting of longitudinal tubes 41 advantageously positioned on four sides and secured to the inner sides of the sidewall of the reactor 11 (Fig.7a).

According to the variant shown in Fig.8a these instruments consist of cutters 42 which, in view of their configuration shown in Fig.8b, cause the mixing of the curd and contribute at the same time to the forward movement of the curd, thus performing also the function of a worm.

At least one second tube 47 is positioned within the reactor 11 and coaxially therewith in this case and has the purpose of introducing into the reactor 11 a fluid for the heating, cooling, diluting or washing of the curd according to the characteristics of the product to be obtained.

According to a variant, at least one thermometer 46 is arranged in association with the second tube 47 so as to measure continuously the temperature of the curd within the reactor 11.

According to another variant third tubes 45 bearing a plurality of nozzles to deliver activating, aromatising or preserving substances or substances of another type into the reactor 11 are included.

The curd at the outlet of the reactor 11 is discharged in this case into a continuously rotatable drum 20 driven by a second motor 27.

This rotary drum 20 includes containing cavities 21, which in this case have the form of an overturned pyramid and are positioned below the outlet 17 of the reactor 11 during the step of discharge of the curd when the syneresis and/or drainage process has ended.

The rotary drum 20 includes conveying means consisting of a first trolley 24 able to move on wheels 22 on a plane substantially parallel to the axis of the reactor 11.

According to the invention a means 23 to dispense salt is caused to act in the step of discharge of the curd from the reactor 11 into the rotary drum 20 and is located above, and in a position corresponding to, that of the rotary drum 20.

This means 23 to dispense salt is also installed on a second trolley 25 with wheels 26 and is displaced in coordination with the rotary drum 20 and lies on a plane parallel to the axis of the reactor 11.

In this step is carried out the salting of the curd in the containing cavities 21 of the rotary drum 20 according to the specific methods for each type of cheese.

The curd subjected to the salting is then discharged into a tubular forming column 28.

In this forming column 28, which consists substantially of a vertically positioned tubular element advantageously downwardly tapered, the curd is accumulated and compacted to form a column of a determined geometric shape.

The forming column 28 has a flared inlet 29 to assist introduction of the curd.

According to the variant shown in Fig.7b a cutting tool 66 is included in cooperation with the inlet 29 of the forming column 28 and consists in this case of two sets of rotary blades 65a and 65b respectively.

With this embodiment the inclusion of the rotary drum 20 is unnecessary and the curd is discharged directly and continuously from the outlet 17 of the reactor 11 into the forming column 28, the salting being carried out on the moving curd as it enters the forming column 28. In this case the cutting tool 66 performs the function of making a uniform distribution of the salt on the whole curd.

The cutting tool 66 also has the task of an effective shearing of the curd so that too large and compacted pieces are not discharged into the forming column 28.

In this case the forming column 28 includes a plurality of filter apertures 49, which are fixed removably in the sidewall of the forming column 28 and are interchangeable and therefore enable the draining capacity of the forming column 28 to be adjusted and changed very readily and quickly according to the type of product to be obtained.

These filter apertures 49 can be distributed in the whole of, or in part of, the sidewall of the forming column 28 in a number and at heights required according to the times needed for the production cycle.

According to another variant the salting of the curd is carried out inside the reactor 11 and substantially at the outlet 17 thereof.

In this case a suitable means that can be moved on a third trolley 35, which bears a worm 36 to distribute the salt, is included in front of the outlet 17.

This worm 36 is introduced into the reactor 11 by means of the traversing of the third trolley 35 and carries out the salting of the curd positioned in the last segment inside the reactor 11.

This inner salting system can be an alternative to, or be complementary to, the external salting performed by the salt-dispensing means 23.

Two shearing blades, namely an upper blade 30a and a lower blade 30b respectively, are included in cooperation with the forming column 28 and shear the column of curd into single loaves.

The distance between the shearing blades 30a,30b can be adjusted according to the required height of the loaves of curd.

In this case the upper shearing blade 30a is fixed by being suspended on the supporting structure 12, whereas the lower shearing blade 30b is supported on the ground.

The supports of the lower shearing blade 30b are associated with a second jack 34 which can be adjusted as required, even during the processing, so as to define and alter as required the height of the loaves of curd to be sheared.

This configuration prevents also stresses on the supporting structure 12 during actuation of the shearing blades 30a, 30b.

Lastly, the sheared loaves are discharged into appropriate moulds or matrices 31 held on a first step conveyor 32, by which the moulds 31 are removed and sent to the successive processes such as the pressing and marking for instance.

According to the invention the first step conveyor 32 is advantageously in synchronised connection with the shearing blades 30a,30b.

The working of the whole plant 10 is governed by an actuation and control unit, which is not shown here but by which all the parameters of the working during the whole production cycle are managed and controlled.

According to the invention, load cells 48a are included in cooperation with the reactor 11 and measure continuously the quantity of curd within the reactor 11 and supply this value to the actuation and control unit.

This arrangement enables the speed of feed and of discharge of the curd to be conditioned so as to keep in every working step the most suitable quantity of curd within the reactor 11, this most suitable quantity having been pre-set according to the type of finished product to be obtained.

According to the invention further load cells 48b are located in cooperation with the forming column 28 so as to ensure at all times the correct filling of the column 28, and yet further load cells 48c are included in cooperation with the salt-dispensing means 23 for dosage of the correct quantity of salt.

The variant shown in Fig.2 illustrates an embodiment which can be used where the embodiment of Fig.1 cannot be achieved, owing to a low height of the factory, for instance.

In this case the reactor 11 is located in a lowered position and discharges the curd into the rotary drum 20, which may possibly not be included.

The curd is transferred from the rotary drum 20, or possibly directly from the outlet 17 of the reactor 11, by means of a second conveyor 33 with an at least partly ascending travel towards the upper inlet 29 of the forming column 28, in which the processes already described with reference to the embodiment in Fig.1 are repeated.

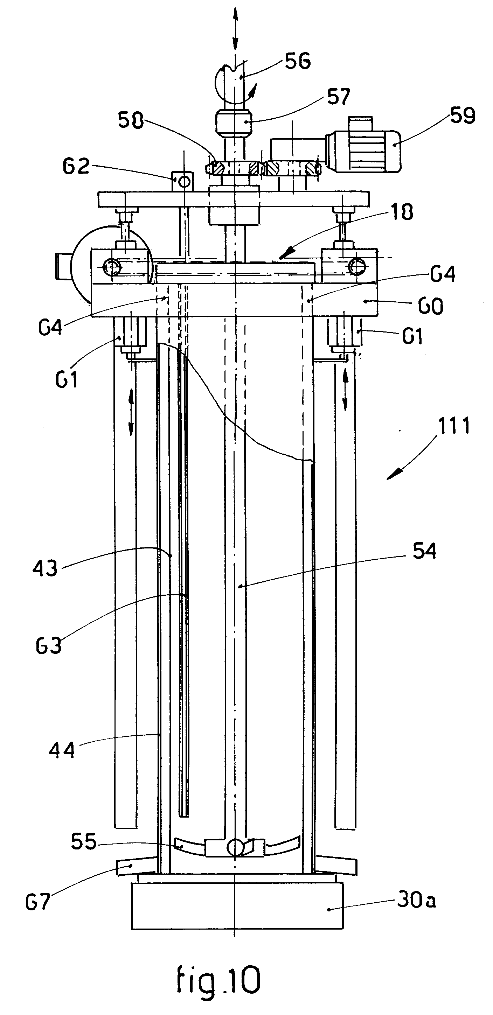

In the variant shown in Fig.10, which is employed in the event of production of hard or semi-hard cheeses, whether cooked or pressed, the reactor 111 is configured to carry out a partial syneresis and/or drainage with consequent acidifying of the curd in the whey.

In this case, according to the invention, the cheesemaking reactor 111 is positioned vertically and performs also the function, at least in its lower part, of a forming column and carries out a treatment in the whey and a continuous discharge of the product without interrupting the cycle, the cycle taking up very short times.

Where the process requires a pause for maturing inside the reactor 111, a battery of reactors 111 may be provided so as not to interrupt the feeding process and therefore the making of cheese from the curd.

As described previously, the reactor 111 includes a perforated steel plate 43 associated with an outer tank 44, which includes means 67 to convey and discharge the liquid whey separated from the curd.

The means to feed the curd into the reactor 111 through the relative feeder end 18 consists in this case of a tube 54 open at its lower end and bearing at that lower end stirring and scraping paddles 55.

The tube 54 is connected at its upper end by a joint 57 to a stationary pipe 56 connected to the feed of the curd.

This tube 54 is equipped with gear means 58 connected to a motor-reducer unit 59; while the curd is being fed, the tube 54 is set in rotation so as to cause an action of mixing and stirring the curd due also to the action of the stirring and scraping paddles 55.

As the feed proceeds, the tube 54 together with a base plate 60 and with drive means and process indicators referenced with 62 is raised progressively in relation to the perforated steel plate 43 and the tank 44 by the action of third jacks 61.

The process indicators 62 may include, as said previously, thermometers, pH meters, means to introduce activating substances or means of another type and, in this specific case, at least one level probe 63, which regulates the speed of feed of the curd into the reactor 111 and the speed of raising the tube 54 so as to keep the correct filling and discharge conditions.

In this case the perforated steel plate 43, which is possibly downwardly tapered, is associated with drive means 64 able to impart to the plate 43 an oscillatory movement with suitably controlled parameters of frequency and travel according to the type of cheese being processed, this oscillatory movement assisting descent of the curd along the reactor 111 and adjusting the compacting of the same.

This compacting is performed at the upper shearing blade 30a, as described previously.

According to a further variant shown in Fig.9 the reactor 111 for processing in whey consists of a rotatable cylinder 51, which includes in its periphery a plurality of passages 52 and is positioned within a sealed cylindrical container 50, in which a determined quantity of whey is kept constantly so that the curd undergoes a process of partial syneresis with acidification in the whey.

In this case the rotatable cylinder 51 is equipped with screens (not shown here) to define a plurality of stages in the longitudinal direction, the movement of the curd from one stage to the next stage being determined by the attainment of a given value of relative density due to the progressive dehydration of the curd.

## Claims

1. Method for the automated production of cheese in a plant comprising at least one cheesemaking reactor and a forming column suitable for the compacting and accumulation of the curd, there being included below the forming column shearing blades (30a, 30b) and moulds (31) associated at least momentarily with a first conveyor (32), the method being characterised in that the curd, after being coagulated and possibly cooked, is introduced into a cheesemaking reactor (11, 111) where it is mixed while it is fed forwards at least in steps, the curd undergoing a process of drainage and progressive syneresis within the reactor (11, 111) and being then introduced into a forming column (28) immediately downstream of the reactor (11, 111), the curd within the reactor (11, 111) receiving at least additions of aromatising, preserving and/or activating substances in a solid, liquid or gaseous form.

2. Method as in Claim 1, in which the curd in the reactor (11) is mixed by rotation of the cheesemaking reactor (11) itself.

3. Method as in Claim 1, in which the curd in the reactor (11, 111) is mixed by rotary mixing instruments (41, 42, 55).

4. Method as in any claim hereinbefore, in which the curd is salted at the the outlet of the reactor (11).

5. Method as in any of Claims 1 to 3 inclusive, in which the curd is salted in the terminal portion of the reactor (11).

6. Method as in any claim hereinbefore, in which the curd undergoes at least part of the syneresis process at a controlled overpressure.

7. Method as in any of Claims 1 to 5 inclusive, in which the curd undergoes at least part of the syneresis process under a negative pressure.

8. Method as in any claim hereinbefore, in which the curd is fed, for the processing of cheeses in whey, into the reactor (111) by a tube (54), which is open at its lower end and is initially positioned substantially at the bottom of the reactor and is then raised progressively with parameters of speed such as to keep the progressively discharged curd below the level of the liquid in the reactor (111).

9. Method as in any claim hereinbefore, in which so as to assist the compacting and descent of the curd, the reactor (111) when vertically positioned and/or the forming column (28) are subjected to a jerking up-and-down movement of vertical oscillation with controlled parameters of travel and frequency.

10. Plant for the automated production of cheese with a cheesemaking reactor, the cheesemaking reactor cooperating with possible salt-dispensing means (23, 36) and with a forming column (28) suitable for the compacting and accumulation of curd, the forming column (28) cooperating at its lower end with shearing blades (30a, 30b) and with moulds (31) associated at least momentarily with a first conveyor (32), the plant being characterised in that the cheesemaking reactor (11, 111) comprises a feeder end (18) and an outlet (17), the feeder end (18) being associated directly with coagulation kettles for feeding the possibly cooked curd, the reactor (11, 111) being positioned within a tank (44) for the recovery of liquids, the tank (44) being associated with a perforated jacket (43) suitable for the expulsion and progressive drainage of the liquid whey contained in the curd, that is to say, suitable for the syneresis during the movement of the curd within the reactor (11, 111), the reactor (11, 111) discharging continuously from its outlet (17), when syneresis is completed, the curd into the forming column (28), the reactor (11, 111) containing at least means (45) to introduce activating, preserving or aromatising substances in a solid, liquid and/or gaseous form and also means (41, 42, 55) to stir and mix the curd.

11. Plant as in Claim 10, in which the reactor (11) is positioned horizontally and cooperates with a vertical forming column (28), the reactor (11) and forming column (28) being separate components of the plant (10).

12. Plant as in Claim 10, in which the reactor (11) is positioned vertically and cooperates with a vertical forming column (28), the reactor (11) and forming column (28) being separate components of the plant (10).

13. Plant as in any of Claims 10 to 12 inclusive, in which means (23) to dispense salt are included and are located between the outlet (17) of the reactor (11) and the inlet (29) of the forming column (28).

14. Plant as in any of Claims 10 to 13 inclusive, in which the inlet (29) of the forming column (28) cooperates with a cutting tool (66) having rotary blade (65a, 65b) for the uniform distribution of the salt on the curd.

15. Plant as in any of Claims 10 to 14 inclusive, in which the means (36) which dispense the salt include means to introduce the salt into the reactor (11).

16. Plant as in any of Claims 10 to 15 inclusive, in which a rotary drum (20) containing cavities (21) to contain curd is included between the outlet (17) of the reactor (11) and the inlet (29) of the forming column (28).

17. Plant as in any of Claims 10 to 16 inclusive, in which the reactor (11) includes internally and substantially at its feeder end (18) a rotary ring (40) of a smaller diameter with radial distributing walls (53), within which ring (40) the feeder tube (39) discharges the curd, the rotary ring (40) reducing the speed and pressure of impact of the curd against the insides of the sidewall of the reactor (11).

18. Plant as in Claim 10, in which the reactor (111) is positioned vertically and performs, at least in its lower part, the function too of a forming column.

19. Plant as in Claim 18, in which the reactor (111) cooperates with a rotary tube means (54), which introduces the curd and is open at its lower end and is raised progressively during the discharge of the curd so as to keep the introduced curd below the level of the liquid already present in the reactor (111).

20. Plant as in Claim 18 or 19, in which the reactor (111) cooperates with means (64) that oscillate vertically at least the perforated jacket (43).

21. Plant as in any of Claims 10 to 20 inclusive, in which the reactor (11, 111) contains means (47) that introduce liquids for cooling, heating, diluting and/or washing the curd.

22. Plant as in any of Claims 10 to 21 inclusive, in which the reactor (11, 111) contains means (46) to measure the temperature, means to measure the pH and means to measure the pressure.

23. Plant as in any of Claims 10 to 22 inclusive, in which the reactor (11, 111) cooperates with load cells (48a) and/or level probes (63) so as to maintain the correct conditions of filling and/or discharge.

24. Plant as in any of Claims 10 to 23 inclusive, in which there are load cells (48b, 48c) cooperating respectively with the forming column (28) and with the salt dispensing means (23, 36).

25. Plant as in any of Claims 10 to 24 inclusive, in which the forming column (28) includes in its periphery interchangeable filtration apertures (49) having a variable draining capacity.

26. Plant as in any of Claims 10 to 25 inclusive, in which the distance between the shearing blades (30a, 30b) can be adjusted during the processing.

27. Plant as in any of Claims 10 to 26 inclusive, in which the forward movement of the first conveyor (32) is synchronised with the actuation of the shearing blades (30a, 30b).

28. Plant as in any of Claims 10 to 27 inclusive, in which the reactor (11, 111) includes means to adjust the pressure so as to define within the reactor conditions of overpressure, negative pressure or atmospheric pressure according to the type of process being performed.
